# EUROPÄISCHE PATENTSCHRIFT

(11) **EP 3 586 415 B1**
(45) Veröffentlichungstag und Bekanntmachung des Hinweises auf die Patenterteilung: **29.06.2022**
(21) Anmeldenummer: 18704511.7
(22) Anmeldetag: 07.02.2018
(51) Int. Cl.: H02G 3/06, H02G 15/007

(54) **STECKERKUPPLUNG MIT ZUGENTLASTUNG FÜR EIN VERBINDUNGSKABEL**
PLUG COUPLING WITH STRAIN RELIEF FOR A CONNECTING CABLE
ACCOUPLEMENT À FICHE AVEC ANTITRACTION POUR UN CÂBLE DE RACCORDEMENT

(30) Priorität: 22.02.2017 DE 102017001931
(43) Veröffentlichungstag der Anmeldung: 01.01.2020
(73) Patentinhaber: ZF CV Systems Europe BV, 1170 Brussels (BE)
(72) Erfinder: STELLMACHER, Thomas, 31655 Stadthagen (DE); BRINKMEIER, Ingo, 30171 Hannover (DE); JOVERS, Ingo, 30989 Gehrden (DE); LUCAS, Johann, 31319 Sehnde (DE)
(74) Vertreter: Rabe, Dirk-Heinrich
(86) Internationale Anmeldenummer: PCT/EP2018/052995
(87) Internationale Veröffentlichungsnummer: WO 2018/153661

(56) Entgegenhaltungen:
- EP-A1- 2 493 040
- DE-A1- 3 018 119
- DE-A1-102008 057 473
- FR-A1- 2 524 217
- GB-A- 2 091 498
- US-B1- 6 476 319

## Beschreibung

Die Erfindung betrifft eine Zugentlastungsanordnung für ein Verbindungskabel, aufweisend einen Gewindezapfen, Klemmzungen am freien Ende des Gewindezapfens, eine Überwurfmutter zum Aufschrauben auf den Gewindezapfen, eine Durchmesservergrößerung am Gewindezapfen zur Anlage an eine Oberfläche eines Trägerelements, sowie einen Fortsatz zum Einführen und Befestigen in einer Öffnung des Trägerelements, wobei der die Zugentlastungsanordnung eine Durchgangsbohrung zum Durchführen des Verbindungskabels aufweist, und bei der durch ein Aufschrauben der Überwurfmutter auf den Gewindezapfen die Klemmzungen radial nach innen bewegbar sowie gegen den Außenumfang des Verbindungskabels pressbar sind, um die Zugentlastung des Verbindungskabels zu bewirken.

Eine derartige Steckerkupplung ist aus der DE 36 04 214 A1 bekannt. Der axiale Fortsatz zum Einführen und Befestigen in einer Öffnung des Trägerelements ist ebenfalls als Gewindezapfen ausgebildet, so dass es erforderlich ist, diese Steckerkupplung am Trägerelement durch eine weitere Überwurfmutter von der Rückseite her zu befestigen. Diese Befestigungsart ist umständlich, insbesondere wenn die Rückseite des Trägerelements schwer zugänglich ist.

DE 10 2008 057 473 A1 offenbart eine Kabeldurchführung zur Durchführung eines Kabels durch eine Öffnung in einer Wandung. Die Kabeldurchführung weist einen Verriegelungsabschnitt auf, der durch die Öffnung durchführbar und in der Öffnung verriegelbar ist. Dazu weist der Verriegelungsabschnitt eine an die Öffnung angepasste, nicht runde Querschnittsfläche auf, die so ausgebildet ist, dass der Verriegelungsabschnitt in einer ersten Stellung durch die Öffnung durchsteckbar und in einer zweiten, gedrehten Stellung nicht wieder durch die Öffnung herausziehbar ist. Ebenfalls zu diesem Zweck sind hinter dem Verriegelungsabschnitt ein im montierten Zustand an der Wandung anliegender erster Abschnitt und ein im montierten Zustand durch die Öffnung ragender zweiter Abschnitt angeordnet, wobei der durch die zweite Abschnitt einen geringeren Durchmesser aufweist als der erste Abschnitt und einen geringeren Durchmesser aufweist als der Verriegelungsabschnitt.

EP 2 493 040 A1 offenbart ein Kabelanschlussstück. Das Kabelanschlussstück weist ein mit Zähnen versehenes ringförmiges Bauteil auf, an dessen Basis ein Gewinde angeordnet ist, auf das ein Befestigungsring aufgeschraubt werden kann. Ist ein Kabel durch das Kabelanschlusstück geführt und der Befestigungsring aufgeschraubt, drückt der Befestigungsring die Zähne gegen das Kabel und klemmt so das Kabel in dem Kabelanschlusstück fest. An einer gegenüberliegenden Seite weist das Kabelanschlusstück einen Gewindeschaft auf. Der Gewindeschaft kann in einen Gewindesitz an einem Gegenstand geschraubt werden, an dem das Kabelanschlusstück befestigt werden soll.

GB 2 091 498 A offenbart eine Kabelhaltevorrichtung zur Durchführung eines Kabels durch eine Öffnung in einer Wandung. Die Kabelhaltevorrichtung weist einen Kragen, ein Außengewinde und mehrere Klemmzungen auf. Der Kragen wird zur Anlage an die Wandung gebracht. Eine kappenartige Feststellschraube mit einem Innengewinde kann auf das Außengewinde aufgeschraubt werden. Dabei werden die Klemmzungen nach innen gepresst.

US 6 476 319 A1 offenbart ein Anschlussstück zum Anschließen eines Kabels an einen Verteilerkasten. Das Kabel wird durch das Anschlussstück geführt und mittels einer Schraube, die durch eine Seitenwand des Anschlussstücks geführt ist und auf das Kabel drückt, in dem Anschlusstück gegen Herausziehen gesichert. Das Anschlussstück weist einen im Wesentlichen kreisförmigen Umfang auf, an dem drei rotationssymmetrisch angeordnete Laschen hervorragen. Der Verteilerkasten weist in einer Verteilerkastenplatte eine korrespondierende Öffnung von im Wesentlichen kreisförmigem Umfang auf, der drei rotationssymmetrisch angeordnete Aussparungen aufweist. Außerdem ist etwas außerhalb der Öffnung ein Anschlag an der Verteilerkastenplatte vorgesehen. Das Anschlusstück wird in die Öffnung eingeführt, sodass die Laschen durch die Aussparungen am Umfang der Öffnung gleiten. Anschließend wird das Anschlussstück verdreht, bis eine der Laschen an dem Anschlag anschlägt, sodass die Laschen in Bezug auf die Aussparungen in Umfangsrichtung versetzt werden und infolgedessen die Verteilerkastenplatte hintergreifen, sodass das Anschlusstück gegen ein Herausziehen gesichert ist.

Vor diesem Hintergrund lag der Erfindung die Aufgabe zugrunde, eine verbesserte Zugentlastungsanordnung vorzuschlagen, die sich auf einfache Weise, ohne zusätzliche, gesondert zu montierende Bauelemente verwenden zu müssen, lösbar an einem Trägerelement befestigen lässt. Eine solche Zugentlastungsanordnung soll zur lösbaren Kopplung einer Bedieneinheit mit einem elektronisch gesteuerten Luftfederungssystem mittels eines Verbindungskabels dienen können.

Gelöst wird diese Aufgabe mit einer Zugentlastungsanordnung für ein Verbindungskabel, aufweisend einen Gewindezapfen, Klemmzungen am freien Ende des Gewindezapfens, eine Überwurfmutter zum Aufschrauben auf den Gewindezapfen, eine Durchmesservergrößerung am Gewindezapfen zur Anlage an eine Oberfläche eines Trägerelements, sowie einen Fortsatz zum Einführen und Befestigen in einer Öffnung des Trägerelements, wobei der die Zugentlastungsanordnung eine Durchgangsbohrung zum Durchführen des Verbindungskabels aufweist, und bei der durch ein Aufschrauben der Überwurfmutter auf den Gewindezapfen die Klemmzungen radial nach innen bewegbar sowie gegen den Außenumfang des Verbindungskabels pressbar sind, um die Zugentlastung des Verbindungskabels zu bewirken.

Der Fortsatz ist unrund oder mehreckig mit radial größeren und kleineren Bereichen ausgebildet ist, dass die Öffnung des Trägerelements zum unrunden oder mehreckigen Fortsatz geometrisch komplementär ausgebildet ist, dass der wenigstens eine radial vergrößerte Bereich des unrunden oder mehreckigen Fortsatzes zumindest teilweise mit wenigstens einer zur Durchmesservergrößerung benachbarten Umfangsnut versehen ist, dass die axiale Breite der Umfangsnut der Dicke des Trägerelements im Bereich der Öffnung entspricht, und dass die radiale Tiefe der Umfangsnut der radialen Abmessung des wenigstens einen radial kleineren Bereiches des Fortsatzes entspricht, derart, dass sich der Fortsatz in die geometrisch komplementäre Öffnung des Trägerelements einführen und durch eine Drehung um vorzugsweise höchstens 180° in der komplementären Öffnung am Trägerelement befestigen lässt.

Somit ist es möglich, die Steckerkupplung mit Zugentlastung mit einem daran befestigten Verbindungskabel von der Vorderseite des Trägerelements in die Öffnung einzuführen und durch eine einfache, begrenzte Drehung in der geometrisch komplementären Öffnung am Trägerelement zu befestigen, ohne dass Befestigungsschrauben oder von der Rückseite des Trägerelements auf die Steckerkupplung aufzuschraubende Überwurfmuttern angebracht werden müssen.

Ein Bereich der Durchmesservergrößerung an der Zugentlastungsanordnung ist als kreisförmiger Flansch ausgebildet, dessen Durchmesser größer ist als die größte radiale Erstreckung der Öffnung des Trägerelements. Der kreisförmige Flansch weist einen der Oberfläche des Trägerelements zugewandten, in wenigstens eine Vertiefung in der Oberfläche des Trägerelements einrastbaren Rastzapfen auf. Diese Durchmesservergrößerung, die als kreisförmiger Flansch ausgebildet ist, deckt somit die Öffnung im Trägerelement vollständig ab und erlaubt es, die Zugentlastungsanordnung mit dem Trägerelement auf einfache Weise zu verrasten, da der Rastzapfen mit dem Trägerelement vorzugsweise einstückig hergestellt sein kann.

Auf der dem Gewindezapfen mit den Rastzungen zugewandten Seite der als kreisförmiger Flansch ausgebildeten Durchmesservergrößerung kann ein Sechskant ausgebildet sein, um eine Handhabe für einen Schraubenschlüssel zu bieten, wenn die Zugentlastungsanordnung in die Öffnung des Trägerelements eingesetzt und bis zur Verrastung des Raststifts mit einer entsprechenden Rastbohrung im Trägerelement gedreht werden soll.

Hierbei ist vorgesehen, dass der radial vergrößerte Bereich des Fortsatzes aus zwei radial gegenüberliegenden Kreisabschnitten mit dem gemeinsamen Mittelpunkt auf der Längsachse der Bohrung für das Verbindungskabel besteht, dass der radial kleinere Bereich des Fortsatzes aus parallelen, radial gegenüberliegenden

Anflächungen besteht, und dass in jedem radial vergrößerten Bereich je eine Umfangsnut ausgebildet ist. Eine derartig geformte Öffnung lässt sich auf einfache Weise im Trägerelement herstellen, beispielsweise durch Ausstanzen, sofern das Trägerelement aus einem Blech besteht, oder durch eine entsprechende Ausbildung einer Spritzgießform erzeugen, sofern das Trägerelement als Spritzgussteil hergestellt ist.

Die Dicke eines Trägerelements aus Blech kann beispielsweise 1 mm betragen, während ein als Kunststoffspritzgussteil ausgebildetes Trägerelement im Bereich der Öffnung eine Dicke von 3 mm aufweisen kann. Um eine erfindungsgemäße Zugentlastungsanordnung mit Trägerelementen unterschiedlicher Dicke verbinden zu können, können in jedem radial vergrößerten Bereich des Fortsatzes zwei umfangsbezogen aufeinander folgende Umfangsnuten ausgebildet sein, von denen die erste Umfangsnut die axiale Breite entsprechend einer kleineren Dicke eines ersten Trägerelements aufweist und die zweite Umfangsnut eine axiale Breite entsprechend einer größeren Dicke eines anderen Trägerelements hat.

Zur Erleichterung des Einführens und Drehens der Zugentlastungsanordnung in der Öffnung des Trägerelements kann an jeweils einem Ende der Umfangsnuten eine Anlaufschräge ausgebildet sein.

Im Einzelnen kann vorgesehen sein, dass der Grund beziehungsweise Boden der Umfangsnuten ausgehend von den gegenüberliegenden Anflächungen als Kreisbogen zu den gegenüberliegenden Kreisabschnitten hin verläuft, und dass sich daran zu den Kreisabschnitten hin anschließende Tangenten erstrecken, die im in die Öffnung des Trägerelements eingesetzten, gedrehten und verrasteten Zustand der Zugentlastungsanordnung als Drehanschlag wirken.

Die Steckerkupplung lässt sich in der Weise ausbilden, dass der in die Öffnung des Trägerelements einzuführende Fortsatz eine erweiterte Aufnahme für einen an das Verbindungskabel angeschlossenen Steckerkontakt aufweist.

Benachbart zum Umfang der Öffnung im Trägerelement kann eine als Bohrung ausgebildete Vertiefung angeordnet sein, die zur Verrastung der Zugentlastungsanordnung mit einem Trägerelement kleinerer Dicke und zur Verrastung der Zugentlastungsanordnung mit einem Trägerelement größerer Dicke mittels des Rastzapfens in unterschiedlichen Positionen dient.

Die eingangs erwähnte Aufgabe wird des Weiteren durch eine Bedieneinheit für ein elektronisch gesteuertes Luftfederungssystem gelöst, die mit dem elektronisch gesteuerten Luftfederungssystem lösbar über eine mit einem Verbindungskabel gekoppelte Zugentlastungsanordnung, wie vorstehend definiert, elektrisch verbunden ist.

Des Weiteren wird die vorstehend angegebene Aufgabe durch die Verwendung einer wie vorstehend definierten Zugentlastungsanordnung gelöst, welche zur lösbaren Kopplung einer Bedieneinheit mit einem elektronisch gesteuerten Luftfederungssystem mittels eines Verbindungskabels dient.

Ein derartiges elektronisch gesteuertes Luftfederungssystem und die dafür benötigte Bedieneinheit sind allgemein bekannt.

Die Erfindung wird nachstehend anhand eines in der beigefügten Zeichnung dargestellten Ausführungsbeispiels näher erläutert. In der Zeichnung zeigt
Fig. 1 eine perspektivische Darstellung einer Zugentlastungsanordnung mit den Merkmalen der Erfindung, welche über ein Verbindungskabel mit einer Bedieneinheit verbunden ist, und zwar vor deren Ankoppeln an ein Trägerelement,

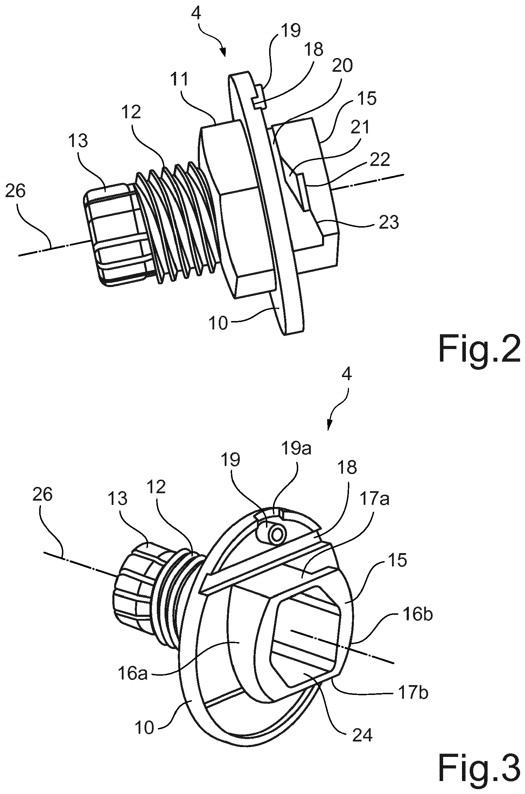

Fig. 2 eine perspektivische Seitenansicht der Zugentlastungsanordnung gemäß Fig. 1 mit Darstellung von Nuten an derselben für die Befestigung an Trägerelementen mit unterschiedlicher Dicke,
Fig. 3 eine perspektivische Darstellung der Zugentlastungsanordnung gemäß Fig. 2 aus einer anderen Blickrichtung,
Fig. 4 eine bediengerätseitige Draufsicht auf die Zugentlastungsanordnung gemäß den Figuren 2 und 3,
Fig. 5 eine zweite Seitenansicht der Zugentlastungsanordnung gemäß den Figuren 2 und 3, sowie
Fig. 6 eine Rückansicht der Zugentlastungsanordnung gemäß den Figuren 2 und 3.

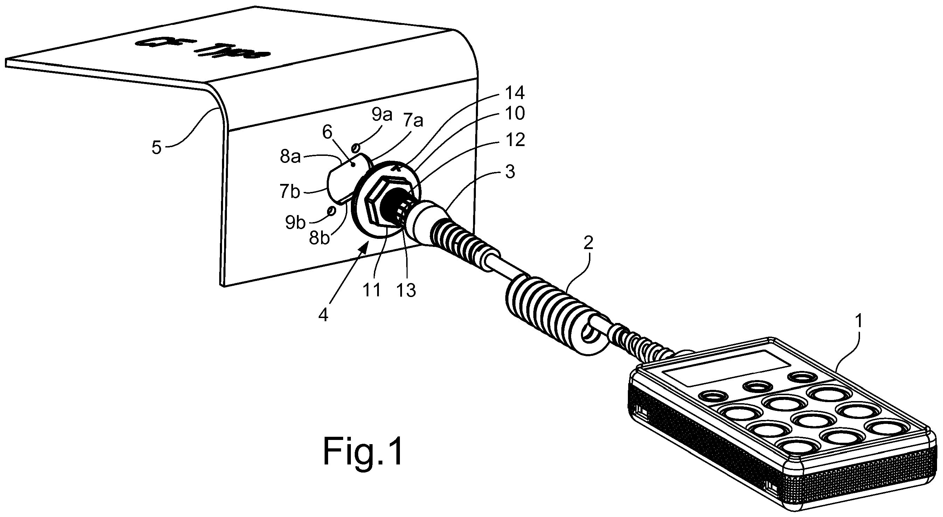

Fig. 1 zeigt demnach eine Bedieneinheit 1 für ein elektronisch gesteuertes Luftfederungssystem, die über ein Verbindungskabel 2 mit einer Zugentlastungsanordnung 4 verbunden ist. Diese Zugentlastungsanordnung 4 ist dazu eingerichtet, an einem Trägerelement 5 befestigt zu werden. Das Trägerelement 5 ist im dargestellten Ausführungsbeispiel als Blechwinkel mit einer Wandstärke von 1 mm ausgebildet. In einem ersten Schenkel des Trägerelements 5 ist eine Öffnung 6 ausgebildet, die als Langloch aus zwei gegenüberliegenden Kreisabschnitten 7a, 7b und zwei diese verbindenden, parallelen Geraden 8a, 8b ausgebildet ist. Nahe des Umfangs der Öffnung 6 sind zwei diametral gegenüberliegende Rastbohrungen 9a, 9b dargestellt, deren Funktion später beschrieben wird.

Die Zugentlastungsanordnung 4 weist eine Durchmesservergrößerung in Form eines kreisförmigen Flansches 10 und eines sich daran anschließenden Sechskants 11 für den Angriff eines Schraubenschlüssels auf. Vom Sechskant 11 ausgehend erstreckt sich koaxial ein Gewindezapfen 12, an dessen freiem Ende kreisförmig mehrere elastische Klemmzungen 13 angeordnet sind. Auf der der Öffnung 6 im Trägerelement 5 zugewandten Seite des Flansches 10 erstreckt sich ein Fortsatz 15 in Richtung zu der Öffnung 6 des Trägerelements 5 mit zwei gegenüberliegenden, radial vergrößerten Bereichen in Form von zylindrischen Kreisabschnittflächen 16a, 16b, deren Mittelpunkt auf einer Längsachse 26 einer Bohrung 25 zum Durchführen des Verbindungskabels 2 durch die Zugentlastungsanordnung 4 liegt. Die zylindrischen Kreisabschnittsflächen 16a, 16b sind verbunden durch radial gegenüberliegende, gerade und parallele Anflächungen 17a, 17b, die einen radial kleineren Bereich des Fortsatzes 15 ergeben. Parallel zu einer der gegenüberliegenden Anflächungen 17a, 17b verläuft eine schmale Quernut 18 durch den Flansch 10, die einen biegeweichen Abschnitt des Flansches 10 nach radial innen begrenzt, in dem ein Rastzapfen 19 angeordnet ist. Ein nahe zum Rastzapfen 19 am Flansch 10 ausgebildeter Ausschnitt 19a dient zum Ansetzen eines Schraubendrehers oder eines ähnlichen Werkzeugs, wie später noch erläutert wird.

Der axiale Fortsatz 15 weist benachbart zur der Öffnung 6 im Trägerelement 5 zugewandten Fläche eine schmale Umfangsnut 20 auf, deren Breite der Dicke des abgebogenen ersten Schenkels des Trägerelements 5 entspricht, beispielsweise 1 mm, sofern das Trägerelement 5 beispielsweise aus einem Metallblech besteht. Von dieser schmalen Umfangsnut 20 geht eine erste Anlaufschräge 21 in eine breitere Umfangsnut 22 über, deren Breite beispielsweise 3 mm betragen kann und der Dicke eines Trägerelements 5 aus spritzgegossenem Kunststoff entspricht. Die breitere Umfangsnut 22 endet in einer zweiten Anlaufschräge 23.

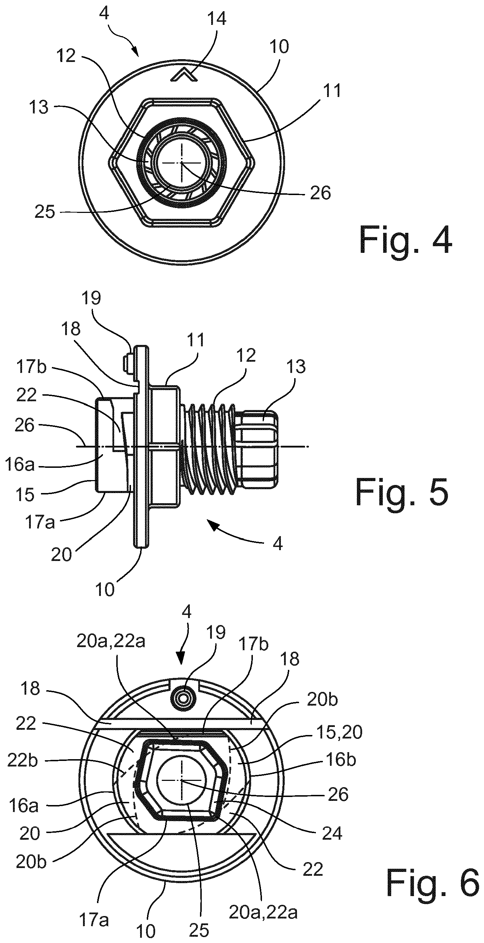

Aus Fig. 6 ist ersichtlich, dass sich die schmale Umfangsnut 20 über einen Kreisabschnitt 20a von 90° erstreckt, an den sich eine Tangente 20b anschließt, welche senkrecht zu den Anflächungen 17a, 17b ausläuft. Die breitere Umfangsnut 22 besteht ebenfalls aus einem von den Anflächungen 17a, 17b ausgehenden Kreisabschnitt 22a, an den sich in einem Winkel von 45° eine Tangente 22b anschließt, die an den zylindrischen Kreisabschnittflächen 16a, 16b ausläuft.

Die Durchgangsbohrung 25 endet im Bereich des Fortsatzes 15 in einer mehreckigen Aufnahme 24 für eine nicht dargestellte, am Verbindungskabel 2 angeschlossene Steckerkupplung.

Zur Montage der Zugentlastungsanordnung 4 wird zunächst auf das Verbindungskabel 2 eine Überwurfmutter 3 aufgeschoben, und anschließend das freie Ende des Verbindungskabels 2 durch die Durchgangsbohrung 25 hindurch geschoben. Daraufhin wird eine nicht dargestellte Steckerkupplung mit den endseitig freien Leitern des Verbindungskabels 2 verbunden, dann das Verbindungskabel 2 mit der Steckerkupplung zurückgezogen, bis die Steckerkupplung in der mehreckigen Aufnahme 24 im Fortsatz 15 positioniert und fixiert ist. Danach wird die Überwurfmutter 3 über die Klemmzungen 13 hinüber geschoben und mit dem Gewindezapfen 12 verschraubt. Die Überwurfmutter 3 weist auf der der Bedieneinheit 1 zugewandten Seite einen Innenkonus auf, der die Klemmzungen 13 beim Anziehen der Überwurfmutter 3 auf den Gewindezapfen 12 radial zusammenpresst und dabei das Verbindungskabel 2 zugfest mit der Zugentlastungsanordnung 4 verbindet, so dass auf das Verbindungskabel 2 ausgeübte Zugkräfte nicht auf die in der Aufnahme 24 befindliche Steckerkupplung weitergeleitet werden können.

Da die Form des inneren Fortsatzes 15 und die Öffnung 6 im Trägerelement 5 geometrisch komplementär zueinander ausgebildet sind, lässt sich der Fortsatz 15 in die Öffnung 6 einführen und danach mit Hilfe eines an dem Sechskant 11 ansetzbaren Schraubenschlüssels drehen, so dass die aus den parallelen Geraden 8 stehenden, engeren Bereiche der Öffnung 6 entweder in die schmale Umfangsnut 20 eingreifen, sofern das Trägerelement 5 aus einem dünnen Blechwinkel mit 1 mm Wandstärke besteht, oder in die breitere Umfangsnut 22 eingreifen, wenn das Trägerelement 5 aus einem Kunststoffspritzgussteil mit einer dickeren Wandstärke von 3 mm besteht. Die Drehung der Zugentlastungsanordnung 4 in der Öffnung 6 wird durch die Tangenten 20b an der Umfangsnut 20 beziehungsweise durch die Tangenten 22b an der Umfangsnut 22 begrenzt, und in dieser Stellung rastet der Rastzapfen 19 in eine der beiden diametral gegenüberliegenden Rastbohrungen 9a, 9b ein. Hierdurch ist die Zugentlastungsanordnung 4 am Trägerelement 5 fixiert. Anschließend lässt sich die nicht dargestellte Steckerkupplung an der Zugentlastungsanordnung 4 mit einem nicht dargestellten Stecker des elektronisch gesteuerten Luftfederungssystems verbinden, welche mit dem Stecker über ein nicht dargestelltes Kabel verbunden ist.

Um die Zugentlastungsanordnung 4 mit dem Trägerelement 5 koppeln zu können, ist es somit nur erforderlich, die Zugentlastungsanordnung 4 von der Vorderseite des Trägerelements 5 aus anzubringen und zu verrasten. Das Lösen der Zugentlastungsanordnung 4 vom Trägerelement 5 geschieht auf ähnlich einfache Weise, indem mittels eines Schraubendrehers oder einem ähnlichen Werkzeug, das in den Ausschnitt 19a am Flansch 10 eingeführt wird, der Rastzapfen 19 aus der Rastbohrung 9 ausgehoben wird, und anschließend die Zugentlastungsanordnung 4 entgegengesetzt zur Drehung zum Befestigen der Zugentlastungsanordnung 4 im Trägerelement 5 gedreht wird, bis sich die Zugentlastungsanordnung 4 aus der Öffnung 6 herausziehen lässt.

Zum Auffinden der Position des Rastzapfens 19 ist auf dem Flansch 10 eine Markierung 14 angebracht. Die Zugentlastungsanordnung 4 ist vorzugsweise als Kunststoffspritzgussteil ausgebildet und kann vorzugsweise aus einem glasfaserverstärkten Polyamid bestehen.

## Patentansprüche

1. Zugentlastungsanordnung (4) für ein Verbindungskabel (2), aufweisend einen Gewindezapfen (12), Klemmzungen (13) am freien Ende des Gewindezapfens (12), eine Überwurfmutter (3) zum Aufschrauben auf den Gewindezapfen (12), eine Durchmesservergrößerung (10, 11) am Gewindezapfen (12) zur Anlage an eine Oberfläche eines Trägerelements (5), sowie einen Fortsatz (15) zum Einführen und Befestigen in einer Öffnung (6) des Trägerelements (5), wobei die Zugentlastungsanordnung (4) eine Durchgangsbohrung (25) zum Durchführen des Verbindungskabels (2) aufweist, und bei der durch ein Aufschrauben der Überwurfmutter (3) auf den Gewindezapfen (12) die Klemmzungen (13) radial nach innen bewegbar sowie gegen den Außenumfang des Verbindungskabels (2) pressbar sind, um die Zugentlastung des Verbindungskabels (2) zu bewirken, wobei der Fortsatz (15) unrund oder mehreckig mit radial größeren und kleineren Bereichen (16, 17) ausgebildet ist, wobei die Öffnung (6) des Trägerelements (5) zum unrunden oder mehreckigen Fortsatz (15) geometrisch komplementär (7, 8) ausgebildet ist, wobei der wenigstens eine radial vergrößerte Bereich (16) des unrunden oder mehreckigen Fortsatzes (15) zumindest teilweise mit wenigstens einer zur Durchmesservergrößerung (10, 11) benachbarten Umfangsnut (20) versehen ist, wobei die axiale Breite der Umfangsnut (20) der Dicke des Trägerelements (5) im Bereich der Öffnung (6) entspricht, und wobei die radiale Tiefe der Umfangsnut (20) der radialen Abmessung des wenigstens einen radial kleineren Bereiches (17) des Fortsatzes (15) entspricht, derart, dass sich der Fortsatz (15) in die komplementäre Öffnung (6) des Trägerelements (5) einführen und durch eine Drehung in der komplementären Öffnung (6) am Trägerelement (5) befestigen lässt, wobei ein Bereich (10) der Durchmesservergrößerung (10, 11) an der Zugentlastungsanordnung (4) als kreisförmiger Flansch (10) ausgebildet ist, dessen Durchmesser größer als die größte radiale Erstreckung der Öffnung (6) des Trägerelements (5) ist, und wobei der kreisförmige Flansch (10) einen der Oberfläche des Trägerelements (5) zugewandten, in wenigstens eine Vertiefung (9) in der Oberfläche des Trägerelements (5) einrastbaren Rastzapfen (19) aufweist, und wobei der radial vergrößerte Bereich (16) des Fortsatzes (15) aus zwei radial gegenüberliegenden Kreisabschnitten (16) mit dem gemeinsamen Mittelpunkt auf der Längsachse (26) der Bohrung (25) für das Verbindungskabel (2) besteht, dass der radial kleinere Bereich (17) des Fortsatzes (15) aus parallelen, radial gegenüberliegenden Anflächungen (17) besteht, und dass in jedem radial vergrößerten Bereich (16) je eine Umfangsnut (20) ausgebildet ist.

2. Zugentlastungsanordnung nach Anspruch 1, **dadurch gekennzeichnet, dass** in jedem radial vergrößerten Bereich (16) des Fortsatzes (15) zwei in Umfangsrichtung aufeinander folgende Umfangsnuten (20, 22) ausgebildet sind, dass die erste Umfangsnut (20) die axiale Breite entsprechend einer kleineren Dicke eines ersten Trägerelements (5) aufweist, und dass die zweite Umfangsnut (22) eine axiale Breite entsprechend einer größeren Dicke eines anderen Trägerelements (5) aufweist.

3. Zugentlastungsanordnung nach Anspruch 2, **dadurch gekennzeichnet, dass** an jeweils einem Ende der Umfangsnuten (20, 22) eine Anlaufschräge (21, 23) ausgebildet ist.

4. Zugentlastungsanordnung nach Anspruch 2 oder 3, **dadurch gekennzeichnet, dass** der Grund der Umfangsnuten (20, 22) ausgehend von den gegenüberliegenden Anflächungen (16) als Kreisbogen (20a, 22a) zu den gegenüberliegenden Kreisabschnitten (17) hin verläuft, und dass sich daran zu den Kreisabschnitten (17) hin anschließende Tangenten (20b, 22b) erstrecken, die im in die Öffnung (6) des Trägerelements (5) eingesetzten, gedrehten und verrasteten Zustand der Zugentlastungsanordnung (4) als Drehanschlag wirken.

5. Zugentlastungsanordnung nach einem der Ansprüche 1 bis 4, **dadurch gekennzeichnet, dass** der in die Öffnung (6) des Trägerelements (5) einzuführende Fortsatz (15) eine erweiterte Aufnahme (24) für einen an das Verbindungskabel (2) angeschlossenen Steckerkontakt aufweist.

6. Zugentlastungsanordnung nach einem der Ansprüche 1 bis 5, **dadurch gekennzeichnet, dass** benachbart zum Umfang der Öffnung (6) im Trägerelement (5) eine als Rastbohrung ausgebildete Vertiefung (6) angeordnet ist, die der Verrastung der Zugentlastungsanordnung (4) mit einem Trägerelement (5) kleinerer Dicke sowie zur Verrastung der Zugentlastungsanordnung (4) mit einem Trägerelement (5) größerer Dicke mittels des Rastzapfens (19) in unterschiedlichen Positionen dient.

7. Bedieneinheit (1) für ein elektronisch gesteuertes Luftfederungssystem, die damit lösbar über eine mit einem Verbindungskabel (2) gekoppelte Zugentlastungsanordnung (4) nach einem der Ansprüche 1 bis 6 elektrisch verbunden ist.

8. Verwendung einer Zugentlastungsanordnung (4) nach einem der Ansprüche 1 bis 6 zur lösbaren Kopplung einer Bedieneinheit (1) mit einem elektronisch gesteuerten Luftfederungssystem (ECAS) mittels eines Verbindungskabels (2).

## Claims

1. Strain relief arrangement (4) for a connecting cable (2), comprising a threaded pin (12), clamping tongues (13) on the free end of the threaded pin (12), a union nut (3) for screwing onto the threaded pin (12), a portion of enlarged diameter (10, 11) on the threaded pin (12) for abutment against a surface of a carrier element (4), as well as a projection (15) to be inserted and fastened in an opening (6) of the carrier element (5), wherein the strain relief arrangement (4) comprises a passage bore (25) for the connecting cable (2) to pass through, and in which the clamping tongues (13) can be moved radially inward and can also be pressed against an outer periphery of the connecting cable (2) by screwing the union nut (3) onto the threaded pin (12), in order to effect the strain relief of the connecting cable (2), wherein the projection (15) is of non-round or polygonal design with radially larger and smaller regions (16, 17), wherein the opening (6) of the carrier element (5) is embodied geometrically complementary (7, 8) to the unround or polygonal projection (15), wherein the at least one radially enlarged region (16) of the unround or polygonal projection (15) is to be provided at least partially with at least one peripheral groove (20) adjacent to the portion of enlarged diameter (10, 11), wherein the axial width of the peripheral groove (20) corresponds to the thickness of the carrier element (5) in the region of the opening (6), and wherein the radial depth of the peripheral groove (20) corresponds to the radial dimension of the at least one radial smaller region (17) of the projection (15) such that the projection (15) can be guided into the complementary opening (6) of the carrier element (5) and can be fastened by rotation in the complementary opening (6) on the carrier element (5), wherein a region (10) of the portion of enlarged diameter (10, 11) is embodied on the strain relief arrangement (4) as a circular flange (10), the diameter of which is greater than the largest radial extension of the opening (6) of the carrier element (5), and wherein the circular flange (10) comprises a latching pin (19) facing the surface of the carrier element (5) that can be latched in at least one depression (9) in the surface of the carrier element (5), and wherein the radially enlarged region (16) of the projection (15) consists of two radially opposing circular portions circular segments (16) with the common center point of the longitudinal axis (26) of the bore (25) for the connecting cable (2), in that the radially smaller region (17) of the projection (15) consists of parallel, radially opposing flattened portions (17), and in that in each radially enlarged region (16) a peripheral groove (20) is embodied.

2. The strain relief arrangement according to claim 1, **characterized in that** in each radially enlarged region (16) of the projection (15) two peripheral grooves (20, 22) are embodied following each other in circumferential direction, **in that** the first peripheral groove (20) comprises the axial width corresponding to a smaller thickness of the first carrier element (5), and **in that** the second peripheral groove (22) comprises an axial width corresponding to a greater thickness of another carrier element (5).

3. The strain relief arrangement according to claim 2, **characterized in that** at each respective end of the peripheral grooves (20, 22) a run-on slope (21, 23) is embodied.

4. The strain relief arrangement according to claim 2 or 3, **characterized in that** the base of the peripheral grooves (20, 22) proceeding from the opposing flattened portions (16) runs to the opposing circular portions (17) as circular arcs (20a, 22a), and that tangents (20b, 22b) extend adjacently to the circular portions (17) extend, which in the inserted, rotated and latched into the opening (6) of the carrier element (5) state of strain relief arrangement (4) act as a rotary stop.

5. The strain relief arrangement according to any of claims 1 to 4, **characterized in that** the projection (15) to be inserted into the opening (6) of the carrier element (5) comprises a widened receptacle (24) for a plug contact connected to the connecting cable (2).

6. The strain relief arrangement according to any of claims 1 to 5, **characterized in that** a depression (6) embodied as a latching bore is arranged adjacent to the circumference of the opening (6) in the carrier element (5), which serves the purpose of latching the strain relief arrangement (4) to a carrier element (5) of smaller thickness and serves the purpose of latching the strain relief arrangement (4) to a carrier element (5) of greater thickness by means of the latching pin (19) in different positions.

7. An operating unit (1) for an electronically controlled air suspension system, which therewith is electrically connected to a strain relief arrangement (4) releasably coupled to a connecting cable (2) according to any of claims 1 to 6.

8. The use of a strain relief arrangement (4) according to any of claims 1 to 6 for releasable coupling of an operating unit (1) to an electronically controlled air suspension system (ECAS) by means of a connecting cable (2).

## Revendications

1. Agencement de décharge de traction (4) pour un câble de liaison (2), qui présente un tenon fileté (12), des languettes de serrage (13) à l'extrémité libre du tenon fileté (12), un écrou-raccord (3) destiné à être vissé sur le tenon fileté (12), une augmentation de diamètre (10, 11) au niveau du tenon fileté (12) destinée à être installée contre une surface d'un élément support (5), ainsi qu'un prolongement (15) destiné à être introduit et fixé dans une ouverture (6) de l'élément support (5), dans lequel l'agencement de décharge de traction (4) présente un alésage traversant (25) pour faire passer le câble de liaison (2) et avec lequel, via un vissage de l'écrou-raccord (3) sur le tenon fileté (12), les languettes de serrage (13) peuvent être déplacées radialement vers l'intérieur ainsi qu'enfoncées contre la périphérie extérieure du câble de liaison (2) pour entraîner la décharge de traction du câble de liaison (2), dans lequel le prolongement (15) est conçu de façon non circulaire ou polygonale avec des régions (16, 17) radialement plus grandes et plus petites, dans lequel l'ouverture (6) de l'élément support (5) est conçue de façon géométriquement complémentaire (7, 8) au prolongement (15) circulaire ou polygonale, dans lequel la au moins une région (16) radialement agrandie du prolongement (15) circulaire ou polygonale est dotée au moins partiellement d'au moins une rainure périphérique (20) voisine de l'augmentation de diamètre (10, 11), dans lequel la largeur axiale de la rainure périphérique (20) correspond à l'épaisseur de l'élément support (5) dans la région de l'ouverture (6), et dans lequel la profondeur radiale de la rainure périphérique (20) correspond à la mesure radiale de la au moins une région (17) radialement plus petite du prolongement (15), de sorte que le prolongement (15) puisse être introduit dans l'ouverture (6) complémentaire de l'élément support (5) et fixé contre l'élément support (5) par une rotation dans l'ouverture (6) complémentaire, dans lequel une région (10) de l'augmentation de diamètre (10, 11) est conçue au niveau de l'agencement de décharge de traction (4) en tant que flanc (10) circulaire dont le diamètre est supérieur à l'extension radialement la plus grande de l'ouverture (6) de l'élément support (5), et dans lequel le flanc (10) circulaire présente un tenon d'encliquetage (19) qui fait face à la surface de l'élément de support (5) et qui peut être encliqueté dans au moins un renfoncement (9) dans la surface de l'élément support (5), et dans lequel la région radialement agrandie (16) du prolongement (15) se compose de deux sections circulaires (16) opposées radialement avec le point central commun sur l'axe longitudinal (26) de l'alésage (25) pour le câble de liaison (2), en ce que la région radialement plus petite (17) du prolongement (15) se compose de zones aplaties (17) opposées radialement et parallèles, et en ce que dans chaque région radialement agrandie (16) est respectivement conçue une rainure périphérique (20).

2. Agencement de décharge de traction selon la revendication 1, **caractérisé en ce que** dans chaque région radialement agrandie (16) du prolongement (15) sont conçues deux rainures périphériques (20, 22) qui se succèdent dans la direction périphérique, **en ce que** la première rainure périphérique (20) présente la largeur axiale qui correspond à une épaisseur plus petite d'un premier élément support (5), et **en ce que** la seconde rainure périphérique (22) présente une largeur axiale qui correspond à une épaisseur plus grande d'un autre élément support (5).

3. Agencement de décharge de traction selon la revendication 2, **caractérisé en ce qu'**un biais de montée (21, 23) est conçu à une extrémité respective des rainures périphériques (20, 22).

4. Agencement de décharge de traction selon la revendication 2 ou 3, **caractérisé en ce que**, partant des zones aplaties (16) opposées, le fond des rainures périphériques (20, 22) se déroule en tant qu'arc de cercle (20a, 22a) en allant vers les sections circulaires (17) opposées, et **en ce que** vers les sections circulaires (17) s'étendent des tangentes (20b, 22b) qui s'ensuivent, lesquelles agissent en tant que butée de rotation à l'état inséré, pivoté et encliqueté de l'agencement de décharge de traction (4) dans l'ouverture (6) de l'élément support (5).

5. Agencement de décharge de traction selon l'une des revendications 1 à 4, **caractérisé en ce que** le prolongement (15) destiné à être introduit dans l'ouverture (6) de l'élément support (5) présente un logement (24) élargi pour un contact de prise raccordé au câble de liaison (2).

6. Agencement de décharge de traction selon l'une des revendications 1 à 5, **caractérisé en ce qu'**un renfoncement (6) conçu en tant qu'alésage d'encliquetage est agencé dans le voisinage de la périphérie de l'ouverture (6) dans l'élément support (5), lequel renfoncement sert à encliqueter l'agencement de décharge de traction (4) avec un élément support (5) d'épaisseur plus petite ainsi qu'à encliqueter l'agencement de décharge de traction (4) avec un élément support (5) d'épaisseur plus grande dans différentes positions au moyen du tenon d'encliquetage (19).

7. Unité de commande (1) pour un système de suspension pneumatique commandé électroniquement qui est reliée à celui-ci de façon amovible via un agencement de décharge de traction (4) couplé électriquement à un câble de liaison (2) selon l'une des revendications 1 à 6.

8. Utilisation d'un agencement de décharge de traction (4) selon l'une des revendications 1 à 6 pour un couplage amovible d'une unité de commande (1) avec un système de suspension pneumatique commandé électroniquement (ECAS) au moyen d'un câble de liaison (2).
